# EUROPEAN PATENT SPECIFICATION

(11) **EP 2 085 714 B1**
(45) Date of publication and mention of the grant of the patent: **17.11.2010**
(21) Application number: 08150955.6
(22) Date of filing: 01.02.2008
(51) Int. Cl.: F24H 9/12, G05D 23/02, F24D 3/12

(54) **Heating medium distribution method and arrangement**
Verfahren und Anordnung zur Verteilung eines Erwärmungsmittels
Procédé et agencement de distribution de support de chauffage

(43) Date of publication of application: 05.08.2009
(73) Proprietor: Rettig ICC B.V., 6199 AA Maastricht-Airport (NL)
(72) Inventor: Arvidsson, Thomas, 341 35 Ljungby (SE); Karlsson, Jerry, 312 61 Mellbystrand (SE); Ralsgård, Anna, 283 91 Osby (SE); Struyf, Johan, 3090 Overijse (BE); Königshofer, Siegfried, 8680 Mürzzuschlag (AT); Kloetzel, Olaf, 38667 Harzburg (DE)
(74) Representative: Hjalmarsson, Magnus Axel

(56) References cited:
- EP-A- 1 039 249
- EP-A- 1 304 528
- EP-A- 1 703 357
- DE-U1- 20 201 216
- DE-U1- 20 305 054

## Description

### Field of the invention

The present invention relates to a heating medium distribution arrangement for connecting a main heater circuit of an indoor heating system in series with an auxiliary heater circuit, wherein the heating medium distribution arrangement also allows for bypassing the auxiliary heater circuit.

The invention further relates to a corresponding method for distributing a heating medium to a main heater and an auxiliary heater.

### Background of the invention

Heating systems for controlling indoor climate have existed for as long as there has been buildings. Today's systems often consist of a centrally located boiler, and a number of radiators mounted on the walls in each of the rooms to be heated. Heat is transported in piping from the boiler to the radiators using a heating medium, e.g. water.

The function of a wall-mounted radiator is to heat the air in a room. However, merely heating the air may result in the floor being cold. This is a problem particularly in bathrooms, where feet are often bare and the flooring material may be clinker or tile with high thermal conductivity. Therefore, over the last decades, underfloor heating systems are becoming commonplace; particularly in bathrooms, but also in other spaces, such as entrance halls, bedrooms, etc. These underfloor heating systems are typically connected to the central heating system along with any wall-mounted radiators or towel warmers.

As the flooring often consists of a material that is sensitive to thermal expansion due to temperature fluctuations, such as clinker, regulation of the heating medium supply to an underfloor heater is a delicate matter. Typically, the heating medium coming from the central boiler has a temperature of 70°C or more, while a significantly lower temperature would be desired for the underfloor heating system.

There exist several known methods to limit the temperature of an underfloor heater.

European patent publication no. EP1703357A1 discloses a return temperature limiting valve, arranged to limit the flow from an underfloor heater should the temperature of the heating medium returning from the underfloor heater exceed a threshold value. In order to respond to temperature variations of the heating medium when the valve is closed, the return temperature limiting valve always permits a leak flow. However, using only a temperature limiting valve on the return side, the water entering the underfloor heater may be too hot, overheating a portion of the flooring near the feed connection of the underfloor heater circuit. Also a larger portion of the flooring may, in fact, be overheated for a period of time before the return temperature limiting valve starts to act.

European patent publication EP1039249A2 discloses a valve arrangement for parallel feed of a radiator and an underfloor heater, wherein temperature limiting valves are located in the feed- as well as return paths to/from the underfloor heater. Each of the embodiments shown incorporates at least three separate valves.

Ideally, there should be as few components as possible involved in a heating medium distribution arrangement, as installation may otherwise be costly and a faulty connection may result in severe damages to the flooring. A compact distribution arrangement having fewer components can also be made more aesthetically appealing.

Further, regulating the temperature of e.g. a bathroom, having both an underfloor heater and a towel warmer, is everything but trouble-free. Heat is emitted to the room both from the underfloor heater and the towel warmer, and the amount of emission depends on many different factors, such as the temperature difference between the respective heat emitter and its surroundings, the emissivity of the surfaces of the heat emitters, the velocity of air flows, the humidity of the air, the presence of any carpet on the floor or towels on the towel warmer, etc. For regulation of the temperature in such a space it is necessary to regulate the flow of heating medium both to the towel warmer and to the underfloor heater. It is however difficult to balance the heat delivery between the two heat emitters in a satisfactory way; for example, an underfloor heater may still deliver heat to the room even if the towel warmer thermostatic valve is closed due to an exceeded room temperature, and vice versa.

There is no known compact, simple valve arrangement for distribution of heating medium to a radiator and an underfloor heater, which yields a stable and well balanced temperature control of a room, while at the same offering a good protection of the floor against overheating.

### Summary of the invention

It is an object of the present invention to provide a compact and simple valve arrangement, which provides a better regulation and balancing of the heat emitted to a room, as well as an improved protection of the flooring.

With the foregoing and other objects in view, there is provided, according to the invention, a heating medium distribution arrangement for connecting a main heater circuit of an indoor heating system in series with an auxiliary heater circuit, the distribution arrangement comprising a main heater return connection; an auxiliary heater feed connection, in fluid connection with the main heater return connection; an auxiliary heater return connection; a system return connection for outgoing heating medium; and a bypass valve arrangement, connected to the main heater return connection, the auxiliary heater return connection, and the system return connection, wherein the bypass valve arrangement is arranged to be set in a first position, in which a first channel between the main heater return connection and the system return connection is closed or choked, and a second channel between the auxiliary heater return connection and the system return connection is open; and a second position, in which the first channel is open.

By assuring that the heating medium will always pass through a main heater first, prior to any passing through an auxiliary heater, the temperature of the heating medium entering the auxiliary heater will be lower, as compared to any arrangement in which heating medium will be allowed to pass directly from the system supply to the auxiliary heater. This is a benefit in installations comprising an auxiliary heater that is sensitive to overheating, e.g. an underfloor heater, where the distribution arrangement according to the invention assists in protecting the floor from overheating. Further, the bypass function permits a heat delivery to the room even if the floor is hot. Obviously, the bypass valve arrangement is not limited to be set in a first and a second position; any intermediate positions may be passed en route, and/or the bypass valve arrangement may be arranged to be set in additional positions implementing any additional functions.

In one embodiment, the second channel is closed or choked when the bypass valve arrangement is in its second position. This configuration increases the bypass flow of the bypass valve arrangement.

Preferably, the bypass valve arrangement is in its second position arranged to provide a leakage flow through the second channel of less than 50%, and more preferably less than 20%, of the flow allowed through the second channel when the bypass valve arrangement is in its first position.

By always providing a leakage through the second channel of the bypass valve arrangement, the temperature of the heating medium from the auxiliary heater will always be known at the location of the bypass valve.

In a preferred embodiment, the bypass valve arrangement is a three-port return temperature limiting valve, arranged to transition between the first and second positions responsive to a variation in temperature of heating medium flowing into the bypass valve arrangement from the auxiliary heater return connection.

By implementing the bypass valve of the distribution arrangement as a return temperature limiting valve, a second protective mechanism, protecting the auxiliary heater from overheating, is obtained. Furthermore, by combining the bypass function with the return temperature limiting function in a three-port configuration, the number of components required for achieving the two functions is reduced, minimizing the size and cost of the installation.

In another preferred embodiment, the bypass valve arrangement comprises an overflow valve, arranged to transition between the first and second positions responsive to a variation of a pressure difference between heating medium in the auxiliary heater feed connection and heating medium in the system return connection. Similarly, the bypass valve arrangement may also be implemented to respond to a pressure difference between heating medium in the main heater return connection and heating medium in the system return connection.

This configuration may be particularly appropriate for existing heating system installations already provided with a two-port return temperature limiting valve on the auxiliary heater's return path.

Preferably, the distribution arrangement further comprises a thermostatic valve, arranged to control the total flow of heating medium through the main heater.

By controlling the total flow of heating medium to the complete distribution arrangement by means of a single thermostatic valve, a stable temperature control of the room is obtained, while at the same time allowing the heating medium delivery to the heaters to be balanced correctly. For controlling the total flow of heating medium through the main heater, the thermostatic valve may, for example, be arranged to control the flow through the system supply connection or the system return connection.

In one embodiment, the thermostatic valve interconnects a system supply connection for incoming heating medium with a main heater feed connection. This is a very compact arrangement, which minimizes the size of the installation and simplifies regulation of heat to the room.

Preferably, the bypass valve arrangement and the thermostatic valve are comprised in the same, single housing. This configuration lowers installation costs, minimizes the risk of faulty connections, and is more aesthetically appealing.

Preferably, the distribution arrangement further comprises means for thermal insulation between the auxiliary heater return connection and a flow of heating medium through the system supply connection. This configuration reduces the risk of any heat from the system supply connection effecting any thermostatic actuation of any bypass valve or return temperature limiting valve comprised in the housing.

In one embodiment, the means for thermal insulation comprises a tubular insert of an insulating material covering a portion of the inner surface of the distribution arrangement.

According to another aspect of the invention, there is provided an indoor heating system comprising an underfloor heater connected in series with a towel warmer or a radiator by means of the above heating medium distribution arrangement.

According to yet another aspect of the invention, there is provided a method for distributing a heating medium to a main heater and an auxiliary heater, comprising the consecutive steps
a) passing all of the heating medium through a thermostatic valve;
b) passing all of the heating medium through the main heater;
c) passing at least a portion of the heating medium through the auxiliary heater; and
d) based on the temperature of the heating medium returning from the auxiliary heater, adjusting the aperture of a bypass valve arrangement that is arranged to control a bypass flow from the main heater directly to a system return connection.

Using this method for distributing heating medium, the auxiliary heater is protected from overheating. By way of example, the aperture of the bypass valve arrangement may be adjusted responsive to a signal from heat sensing element connected to the auxiliary heater circuit, or responsive to a pressure change over the bypass valve caused by a thermally actuated valve in the auxiliary heater circuit.

### Brief description of the drawings

Fig. 1 is a front view in perspective of a first embodiment example of a heating medium distribution arrangement according to the invention.
Fig. 2 is a rear view of the heating medium distribution arrangement in fig. 1.
Fig. 3 is a cross-sectional view of the heating medium distribution arrangement in fig. 1.
Fig. 4 is a second cross-sectional view of the heating medium distribution arrangement in fig. 1.
Fig. 5 is a cross-sectional view of a second embodiment example of a heating medium distribution arrangement, having a different geometrical shape than the embodiment example shown in fig. 1.
Fig. 6 is a cross-sectional view of a third embodiment example of a heating medium distribution arrangement according to the invention.

### Detailed description of the exemplary embodiments

Throughout the following detailed description, like reference numerals refer to like elements.

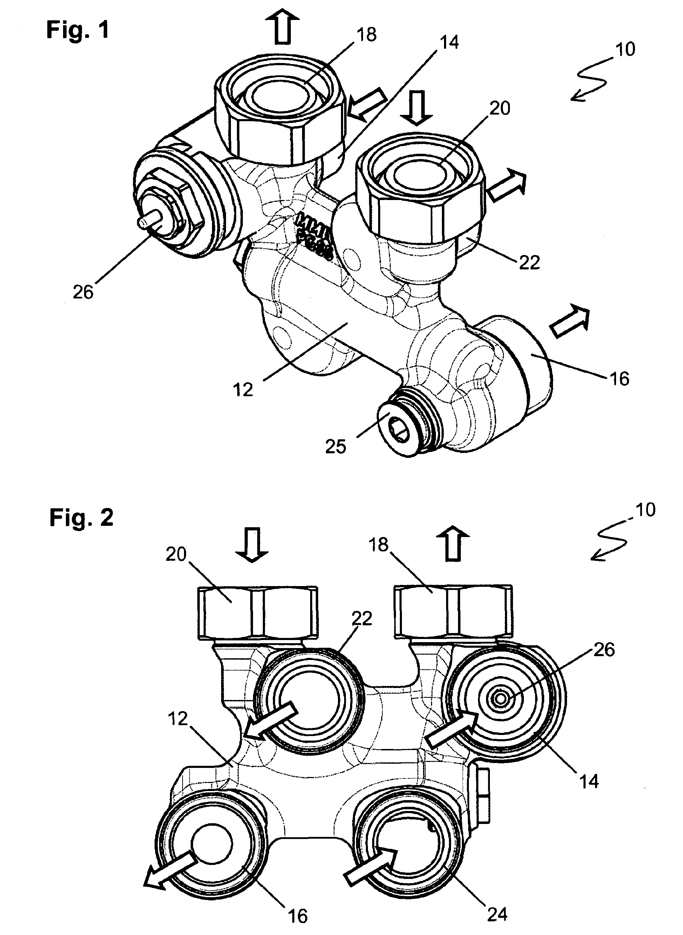

Referring to figs 1-2, a heating medium distribution arrangement 10 is arranged in a single brass housing 12. The distribution arrangement 10 is provided with system supply and return connections 14, 16 for receiving heating medium from an indoor heating system and, after the medium has delivered its heat to the room, returning it to the indoor heating system. The system connections 14, 16 are arranged to be connected to piping protruding from a wall of the room to be heated. Further, the distribution arrangement 10 is provided with upwardly facing feed and return connections 18, 20 for connecting a main heater, which in this example is a towel warmer. This embodiment example is intended for mounting immediately beneath a towel warmer; consequently, the towel warmer connections 18, 20 are located in the upper part of the distribution arrangement 10. Feed and return connections 22, 24 for connecting an auxiliary heater, in this case an underfloor heater, are arranged to, when the distribution arrangement 10 is in use, be connected to piping protruding from a wall of the room. The flow direction through each connection 14, 16, 18, 20, 22, 24 is indicated by an arrow.

A stopcock (not shown) is provided on the system return path, and is arranged to be operated via a socket head cap screw 25.

A main thermostatic valve 26, having a rotateable knob (not shown) for setting a desired temperature of the room, separates the system supply connection 14 from the towel warmer feed connection 18. The thermostatic valve 26 is arranged to adjust the aperture of a channel between the system supply connection 14 and the towel warmer feed connection 18 based on the temperature in the room, in a manner known to those skilled in the art.

It is apparent from fig. 1 that the main thermostatic valve 26 controls the overall flow through the complete distribution arrangement 10, and therefore controls the total heat delivery to the room. Any flow through the heat distribution arrangement 10 will have to pass through the main thermostatic valve 26, and subsequently onward through the towel warmer.

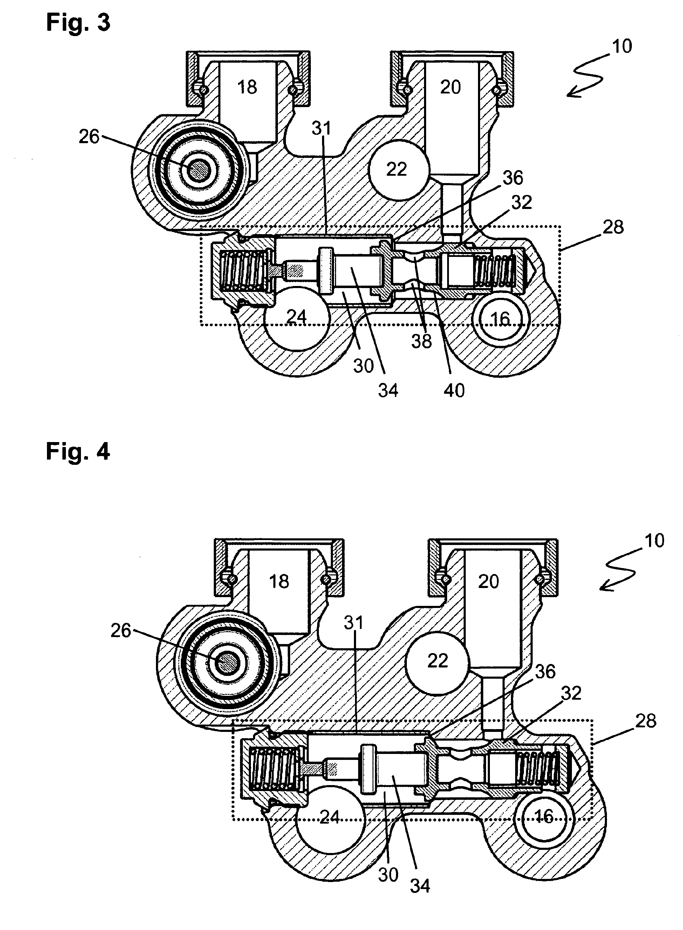

Referring now to the cross-sectional views of figs 3-4, the towel warmer return connection 20 is in direct fluid connection with the underfloor heater feed connection 22 and a first port of a three-port bypass valve 28, which is of a return temperature limiting type. The bypass valve 28 is arranged in a horizontally oriented, essentially cylindrical space 30, defined by a thermally isolating, plastic tubular insert 31 in the lower part of the housing 12. The left part of the cylindrical space 30 is connected to the underfloor heater return connection 24, and the right part of the cylindrical space 30 is connected to the system return connection 16. A valve body 32 is located inside the cylindrical space 30. The valve body 32 is connected to a thermostatic actuator 34, which is located in the return path of the underfloor heater circuit and responds to variations in the temperature of the heating medium coming from the underfloor heater return connection 24.

Thanks to the insulating tubular insert 31 separating the space 30 from the brass housing 12, the thermostatic actuator 34 will remain essentially unaffected by any heat conduction from other portions of the distribution arrangement 10, such as the system supply connection 14.

Any rise in temperature of the heating medium returning from the underfloor heater will result in a horizontal translation from left to right of the valve body 32, and vice versa. In fig. 3, the valve body is in its leftmost position. In this position, the valve body 32 allows heating medium to pass along its surface from the underfloor heater return connection 24, via channels 38, through the rightmost portion of the valve body 32, to the system return connection 16. At the same time, the passage between the towel warmer return connection 20 and the system return connection 16 is blocked by the valve body 32.

When at its rightmost position, as is illustrated in fig. 4, the valve body 32 rests against a valve seat 26. A recess 40 around the perimeter of the valve body 32 allows a flow from the towel warmer return connection 20, via the channels 38, to the system return connection 16. At the same time, the valve body 32 chokes the passage from the underfloor heater return connection 24 to the system return connection 16, but still allows a leakage flow via notches (not shown) in the valve seat 36. In the embodiment shown, the leakage flow from the underfloor heater return connection 24 to the system return connection 16 when the valve body 32 is in its rightmost position is about 20% of the flow allowed when the valve body 32 is in its leftmost position.

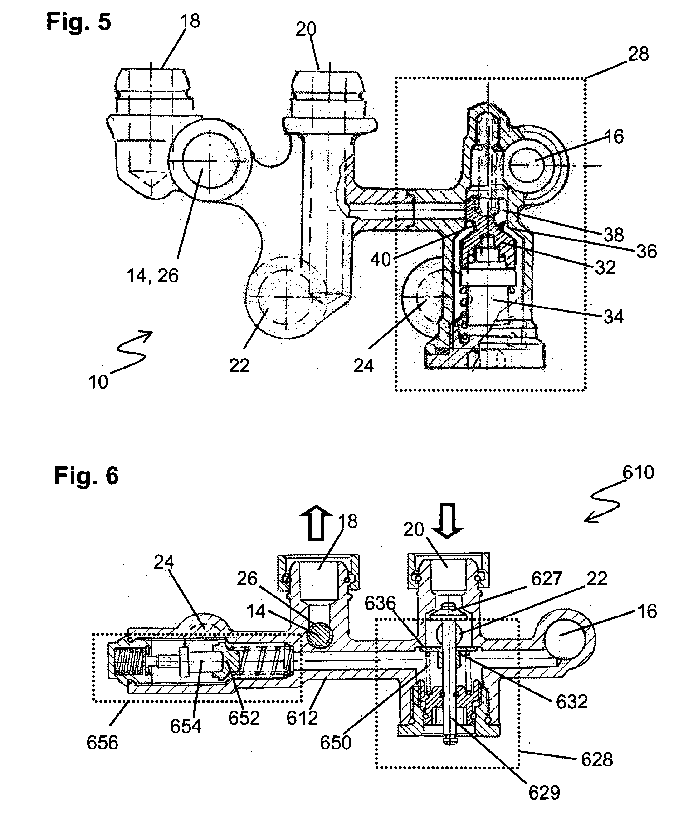

Fig. 5 shows an alternative geometry of the distribution arrangement described above, and for the sake of clarity, like reference numerals still refer to like elements. The embodiment of fig. 5 comprises essentially the same features having the same functions as the embodiment of figs 1-4, but the features are arranged in a different geometry. An advantage with the embodiment of fig. 5, compared to the embodiment of figs 1-4, is that the portion of the distribution arrangement 10 that is likely to be the hottest when in use, i.e. the portion comprising the system supply and towel warmer feed connections 14, 18, is geometrically and thermally separated from the remaining portion comprising the bypass valve arrangement 28. In this configuration, the bypass valve arrangement 28 is less prone to respond to interfering heat from the system supply connection 14, and therefore a smaller leakage flow from the underfloor heater return connection 24 to the system return connection 16 may be sufficient when the bypass valve arrangement 28 is in its second position.

In fact, it is not necessary that the portion of the distribution arrangement 10 that comprises the system supply and towel warmer feed connections 14, 18 or the main thermostatic valve 26 be implemented in the same housing as the portion of the distribution arrangement 10 comprising the bypass valve arrangement 28; the distribution arrangement 10 can be divided between two or more housings. However, even though separate housings may be beneficial from a thermal conduction point of view, a single housing 12 comprising all parts of the distribution arrangement 10 is preferred from production cost and ease of installation points of view.

Fig. 6 shows yet another embodiment of the invention. Analogously to the heating medium distribution arrangement 10 shown in figs 1-5, the heating medium distribution arrangement 610 of fig. 6 is provided with system supply and return connections 14, 16, main heater feed and return connections 18, 20, and auxiliary heater feed and return connections 22, 24.

Also analogously, a main thermostatic valve 26 separates the system supply connection 14 from the main heater feed connection 18. The thermostatic valve 26 is arranged to adjust the aperture of a channel between the system supply connection 14 and the main heater feed connection 18 based on the temperature in the room, in a manner known to those skilled in the art.

The main heater return connection 20 is connected, via a stopcock 627, to the auxiliary heater feed connection 22. The stopcock 627 is operated by means of a shaft 629, which allows operation from outside the housing 612. A translation in the vertical direction of the shaft 629 will translate the stopcock 627 in a vertical direction, to open or close a channel between the main heater return connection 20 and the auxiliary heater feed connection 22. When the distribution arrangement 610 is in use, the stopcock 627 is typically at least partially open. An overflow valve 628 separates the auxiliary heater feed connection 22 from the system return connection 16. The overflow valve 628 comprises an overflow valve body 632, which is shaped as an annular disc that is concentric with and penetrated by the shaft 629. The overflow valve body 632 is spring-loaded in the vertical direction, such that it rests against an annular valve seat 636.An elevated pressure of the heating medium in the auxiliary heater feed connection 22, compared to the pressure of the heating medium in the system return connection 16, will result in a force pressing the overflow valve body 632 downwards. If this pressure difference is high enough, the valve 628 will start to open; and the higher the pressure difference, the larger the aperture of the valve 628. The overflow valve may be set to open at a desired pressure difference between the main heater return connection 20 and the system return connection 16 by adjusting the aperture of the stopcock 627, or by adjusting the tension of a spring 650.

A two-port return temperature limiting valve 656, known to those skilled in the art and described in EP1703357A1, is located between the auxiliary heater return connection 24 and the system return connection 16. The return temperature limiting valve 656 is provided with an actuator 654, which translates a valve body 652 in the left-right direction responsive to temperature changes of the heating medium returning from the auxiliary heater circuit. A rise in the temperature of the returning heating medium will result in the valve body 652 moving towards a corresponding valve seat, thus choking the channel between the auxiliary heater return connection 24 and the system return connection 16. A choking of the return temperature limiting valve 656 will then result in an increased pressure difference between the auxiliary heater feed connection 22 and the system return connection 16, and the overflow valve 628 will therefore open correspondingly.

Obviously, in a manner similar to what has been described above as regards the embodiments of figs 1-5, the return temperature limiting valve may be thermally isolated from the system feed connection and/or bypass valve arrangement. It is not necessary that the return temperature limiting valve 656 be located in the same housing as the overflow valve 628; it may be placed at another location along the auxiliary heater circuit with maintained or similar functionality of the heating medium distribution arrangement 610.

It is also possible to use the heating medium distribution arrangement 610 without a return temperature limiting valve in the auxiliary heater circuit, i.e. with no return temperature limiting valve 656 arranged to choke the passage between the auxiliary heater return connection 24 and the system return connection 16. Typically, an underfloor heater circuit exhibits a significant flow resistance, and a corresponding pressure drop from the feed connection 22 to the return connection 24. In the event of an increase of the flow through the main heater circuit, e.g. responsive to adjusting the main thermostatic valve 26, the overflow valve 628 will open to limit the flow through the underfloor heater circuit.

It is apparent from the above detailed description of the embodiments in figs 1-6 that the total flow of heating medium from the system supply will be controlled by the main thermostatic valve, which controls the total heat delivery to the room. In order to protect the flooring, all of the heating medium will pass through the towel warmer, which will act as a heat exchanger that cools the heating medium prior to passing it to the bypass valve.

The bypass valve then determines, on the basis of the temperature of heating medium returning from the underfloor heater, whether to pass the heating medium on to the underfloor heater or to bypass it directly to the system return connection.

The application of the invention is by no means limited to the combination of a towel warmer and an underfloor heater; any indoor climate control application involving two or more heaters, wherein at least one heater requires a different temperature of the heating medium supply than the others, may benefit from this invention. Therefore, any heating medium distribution arrangement allowing the connection of heaters in series while at the same time allowing, responsive to e.g. a temperature or pressure change, bypassing at least one of the heaters, is covered by the scope of the appended claims.

In particular, it should be obvious to any reader of the above detailed description that the first heater circuit along the flow path of the heating medium, which happens to be a towel warmer in the embodiment examples above, may as well be any other heater element, such as a radiator, or any combination of radiators, towel warmers and other elements connected in series, in parallel, or any combination thereof.

## Claims

1. A heating medium distribution arrangement (10, 610) for connecting a main heater circuit of an indoor heating system in series with an auxiliary heater circuit, the distribution arrangement comprising
a main heater return connection (20);
an auxiliary heater feed connection (22), in fluid connection with the main heater return connection (20);
an auxiliary heater return connection (24);
a system return connection (16) for outgoing heating medium; and
a bypass valve arrangement (28, 628), connected to the main heater return connection (20), the auxiliary heater return connection (24), and the system return connection (16), and arranged to be set in
a first position, in which a first channel between the main heater return connection (20) and the system return connection (16) is closed or choked, and a second channel between the auxiliary heater return connection (24) and the system return connection (16) is open; and
a second position, in which the first channel is open.

2. A distribution arrangement according to claim 1, wherein the second channel is closed or choked when the bypass valve arrangement (28, 628) is in its second position.

3. A distribution arrangement according to any of the claims 1-2,
wherein the bypass valve arrangement (28, 628) in its second position is arranged to provide a leakage flow through the second channel of less than 50% of the flow allowed through the second channel when the bypass valve arrangement (28, 628) is in its first position.

4. A distribution arrangement according to any of the claims 1-3,
wherein the bypass valve arrangement (28, 628) in its second position is arranged to provide a leakage flow through the second channel of less than 20% of the flow allowed through the second channel when the bypass valve arrangement (28, 628) is in its first position.

5. A distribution arrangement according to any of the claims 1-4,
wherein the bypass valve arrangement (28) is a three-port return temperature limiting valve, arranged to transition between the first and second positions responsive to a variation in temperature of heating medium flowing into the bypass valve arrangement (28) from the auxiliary heater return connection (24).

6. A distribution arrangement according to any of the claims 1-5,
wherein the bypass valve arrangement (628) comprises an overflow valve, arranged to transition between the first and second positions responsive to a variation of a pressure difference between heating medium in the auxiliary heater feed connection (20) and heating medium in the system return connection (16).

7. A distribution arrangement according to any of the claims 1-6 further comprising a thermostatic valve (26), arranged to control the total flow of heating medium through the main heater.

8. A distribution arrangement according to claim 7, wherein the thermostatic valve (26) interconnects a system supply connection (14) for incoming heating medium with a main heater feed connection (18).

9. A distribution arrangement according to any of the claims 7-8,
wherein the bypass valve arrangement (28, 628) and the thermostatic valve (26) are comprised in the same, single housing (12, 612).

10. A distribution arrangement according to any of the claims 8-9, further comprising means for thermal insulation (31) between the bypass valve arrangement (28, 628) and a flow of heating medium through the system supply connection (14).

11. A distribution arrangement according to claim 10, wherein the means for thermal insulation (31) comprises a tubular insert of an insulating material covering a portion of the inner surface of the distribution arrangement (10, 610).

12. An indoor heating system comprising an underfloor heater connected in series with a towel warmer or a radiator by means of a heating medium distribution arrangement (10, 610) according to any of the previous claims.

13. A method for distributing a heating medium to a main heater and an auxiliary heater, comprising the consecutive steps
a) passing all of the heating medium through a thermostatic valve (26);
b) passing all of the heating medium through the main heater;
c) passing at least a portion of the heating medium through the auxiliary heater; and
d) based on the temperature of the heating medium returning from the auxiliary heater, adjusting the aperture of a bypass valve arrangement (28, 628) that is arranged to control a bypass flow from the main heater directly to a system return connection (16).

## Patentansprüche

1. Heizmedium-Verteilungsanordnung (10, 610) zum Verbinden eines Hauptheizungskreislaufs eines Innenraumheizungssystems in Reihe mit einem Nebenheizungskreislauf, wobei die Verteilungsanordnung Folgendes umfasst:
eine Hauptheizungsrücklaufverbindung (20);
eine Nebenheizungszulaufverbindung (22) in Strömungsverbindung mit der Hauptheizungsrücklaufverbindung (20);
eine Nebenheizungsrücklaufverbindung (24);
eine Systemrücklaufverbindung (16) für abgehendes Heizmedium; und
eine Umgehungsventilanordnung (28, 628), die mit der Hauptheizungsrücklaufverbindung (20), der Nebenheizungsrücklaufverbindung (24) und der Systemrücklaufverbindung (16) verbunden ist und dafür geeignet ist,
in eine erste Position gestellt zu werden, in der ein erster Kanal zwischen der Hauptheizungsrücklaufverbindung (20) und der Systemrücklaufverbindung (16) geschlossen oder gedrosselt ist, und ein zweiter Kanal zwischen der Nebenheizungsrücklaufverbindung (24) und der Systemrücklaufverbindung (16) offen ist; und
in eine zweite Position gestellt zu werden, in der der erste Kanal offen ist.

2. Verteilungsanordnung nach Anspruch 1, wobei der zweite Kanal geschlossen oder gedrosselt ist, wenn sich die Umgehungsventilanordnung (28, 628) in ihrer zweiten Position befindet.

3. Verteilungsanordnung nach einem der Ansprüche 1-2, wobei die Umgehungsventilanordnung (28, 628) in ihrer zweiten Position dafür ausgelegt ist, einen Leckfluss durch den zweiten Kanal von weniger als 50 % des Flusses bereitzustellen, der durch den zweiten Kanal fließen darf, wenn sich die Umgehungsventilanordnung (28, 628) in ihrer ersten Position befindet.

4. Verteilungsanordnung nach einem der Ansprüche 1-3, wobei die Umgehungsventilanordnung (28, 628) in ihrer zweiten Position dafür ausgelegt ist, einen Leckfluss durch den zweiten Kanal von weniger als 20 % des Flusses bereitzustellen, der durch den zweiten Kanal fließen darf, wenn sich die Umgehungsventilanordnung (28, 628) in ihrer ersten Position befindet.

5. Verteilungsanordnung nach einem der Ansprüche 1-4, wobei die Umgehungsventilanordnung (28) ein Dreiweg-Rücklauf-Temperaturbegrenzungsventil ist, das dafür ausgelegt ist, in Reaktion auf eine Temperaturveränderung in dem Heizmedium, das aus der Nebenheizungsrücklaufverbindung (24) in die Umgehungsventilanordnung (28) strömt, zwischen der ersten und der zweiten Position zu wechseln.

6. Verteilungsanordnung nach einem der Ansprüche 1-5, wobei die Umgehungsventilanordnung (628) ein Überlaufventil umfasst, das dafür ausgelegt ist, in Reaktion auf eine Druckdifferenzveränderung zwischen dem Heizmedium in der Nebenheizungszulaufverbindung (20) und dem Heizmedium in der Systemrücklaufverbindung (16) zwischen der ersten und der zweiten Position zu wechseln.

7. Verteilungsanordnung nach einem der Ansprüche 1-6, die des Weiteren ein Thermostatventil (26) umfasst, das dafür ausgelegt ist, den Gesamtfluss an Heizmedium durch die Hauptheizung zu steuern.

8. Verteilungsanordnung nach Anspruch 7, wobei das Thermostatventil (26) eine Systemzuleitungsverbindung (14) für ankommendes Heizmedium mit einer Hauptheizungszulaufverbindung (18) verbindet.

9. Verteilungsanordnung nach einem der Ansprüche 7-8, wobei die Umgehungsventilanordnung (28, 628) und das Thermostatventil (26) in demselben einzelnen Gehäuse (12, 612) untergebracht sind.

10. Verteilungsanordnung nach einem der Ansprüche 8-9, die des Weiteren ein Wärmedämmungsmittel (31) zwischen der Umgehungsventilanordnung (28, 628) und einem Heizmediumfluss durch die Systemzuleitungsverbindung (14) umfasst.

11. Verteilungsanordnung nach Anspruch 10, wobei das Wärmedämmungsmittel (31) einen röhrenförmigen Einsatz aus einem Dämmmaterial umfasst, der einen Abschnitt der Innenfläche der Verteilungsanordnung (10, 610) bedeckt.

12. Innenraumheizungssystem, das eine Fußbodenheizung umfasst, die in Reihe verbunden ist mit einem Handtuchwärmer oder einem Heizkörper mittels einer Heizmedium-Verteilungsanordnung (10, 610) nach einem der vorangehenden Ansprüche.

13. Verfahren zum Verteilen eines Heizmediums zu einer Hauptheizung und einer Nebenheizung, das folgende nacheinander ausgeführte Schritte umfasst:
a) Leiten des gesamten Heizmediums durch ein Thermostatventil (26);
b) Leiten des gesamten Heizmediums durch die Hauptheizung;
c) Leiten mindestens eines Teils des Heizmediums durch die Nebenheizung; und
d) in Abhängigkeit von der Temperatur des aus der Nebenheizung zurückströmenden Heizmediums: Verstellen der Durchflussöffnung einer Umgehungsventilanordnung (28, 628), die dafür ausgelegt ist, einen Umgehungsfluss von der Hauptheizung direkt zu einer Systemrücklaufverbindung (16) zu steuern.

## Revendications

1. Agencement de distribution de milieu de chauffage (10, 610) pour raccorder un circuit d'appareil de chauffage principal d'un système de chauffage en intérieur en série avec un circuit d'appareil de chauffage auxiliaire, l'agencement de distribution comprenant:
un raccord de retour d'appareil de chauffage principal (20);
un raccord d'alimentation d'appareil de chauffage auxiliaire (22), en communication de fluide avec le raccord de retour d'appareil de chauffage principal (20);
un raccord de retour d'appareil de chauffage auxiliaire (24);
un raccord de retour du système (16) pour délivrer un milieu de chauffage; et
un agencement de clapet de dérivation (26, 628) raccordé au raccord de retour d'appareil de chauffage principal (20), au raccord de retour d'appareil de chauffage auxiliaire (24) et au raccord de retour du système (16) et agencé afin d'être réglé en
une première position, dans laquelle un premier canal entre le raccord de retour d'appareil de chauffage principal (20) et le raccord de retour du système (16) est fermé ou étranglé, et un second canal entre le raccord de retour d'appareil de chauffage auxiliaire (24) et le raccord de retour du système (16) est ouvert; et
une seconde position, dans laquelle le premier canal est ouvert.

2. Agencement de distribution selon la revendication 1, dans lequel le second canal est fermé ou étranglé quand l'agencement de clapet de dérivation (28, 628) est dans sa seconde position.

3. Agencement de distribution selon une quelconque des revendications 1 à 2, dans lequel l'agencement de clapet de dérivation (28, 628) dans sa seconde position est agencé afin de fournir un écoulement de fuite à travers le second canal inférieur à 50% de l'écoulement autorisé à traversle second canal quand l'agencement de clapet de dérivation (28, 628) est dans sa première position.

4. Agencement de distribution selon une quelconque des revendications 1 à 3, dans lequel l'agencement de clapet de dérivation (28, 628) dans sa seconde position est agencé afin de fournir un écoulement de fuite à travers le second canal inférieur à 20% de l'écoulement autorisé à travers le second canal quand l'agencement de clapet de dérivation (28, 628) est dans sa première position.

5. Agencement de distribution selon une quelconque des revendications 1 à 4, dans lequel l'agencement de clapet de dérivation (28) est un clapet limitant la température de retour à trois ports, agencé afin de former une transition entre la première et la seconde positions en réponse à une variation de température du milieu de chauffage s'écoulant dans l'agencement de clapet de dérivation (28) depuis le raccord de retour d'appareil de chauffage auxiliaire (24).

6. Agencement de distribution selon une quelconque des revendications 1 à 5, dans lequel l'agencement de clapet de dérivation (628) comprend un clapet de trop-plein, agencé afin de forer une transition entre la première et la seconde position en réponse à une variation d'une différence de pression entre le milieu de chauffage dans le raccord d'alimentation d'appareil de chauffage auxiliaire (20) et le milieu de chauffage dans le raccord de retour du système (16).

7. Agencement de distribution selon une quelconque des revendications 1 à 6 comprenant en outre un clapet thermostatique (26), agencé afin de commander l'écoulement total du milieu de chauffage à travers l'appareil de chauffage principal.

8. Agencement de distribution selon la revendication 7, dans lequel le clapet thermostatique (26) interconnecte un raccord d'alimentation du système (14) pour milieu de chauffage entrant avec un raccord d'alimentation d'appareil de chauffage principal (18).

9. Agencement de distribution selon une quelconque des revendications 7 à 8, dans lequel l'agencement de clapet de dérivation (28, 628) et le clapet thermostatique (26) sont compris dans le même logement unique (12, 612).

10. Agencement de distribution selon une quelconque des revendications 8 à 9, comprenant en outre un moyen d'isolation thermique (31) entre l'agencement de clapet de dérivation (28, 628) et un écoulement de milieu de chauffage à travers le raccord d'alimentation du système (14).

11. Agencement de distribution selon la revendication 10, dans lequel le moyen d'isolation thermique (31) comprend un insert tubulaire en un matériau isolant recouvrant une portion de la surface intérieure de l'agencement de distribution (10, 610).

12. Système de chauffage en intérieur comprenant un appareil de chauffage sous plancher raccordé en série avec un chauffe-serviettes ou un radiateur au moyen d'un agencement de distribution de milieu de chauffage (10, 610) selon une quelconque des revendications précédentes.

13. Procédé de distribution d'un milieu de chauffage à un appareil de chauffage principal et un appareil de chauffage auxiliaire, comprenant les étapes consécutives consistant à:
a) faire passer le milieu de chauffage à travers un clapet thermostatique (26);
b) faire passer tout le milieu de chauffage à travers l'appareil de chauffage principal;
c) faire passer au moins une portion du milieu de chauffage à travers l'appareil de chauffage auxiliaire; et
d) sur la base de la température du milieu de chauffage recevant de l'appareil de chauffage auxiliaire, ajuster une ouverture d'un agencement de clapet de dérivation (28, 628) qui est agencé afin de commander un écoulement de dérivation provenant de l'appareil de chauffage principale directement vers un raccord de retour du système (16).
